# EUROPEAN PATENT APPLICATION

(11) **EP 3 190 461 A1**
(43) Date of publication of application: **12.07.2017**
(21) Application number: 16305009.9
(22) Date of filing: 05.01.2016
(51) Int. Cl.: G03B 37/00

(54) **TWO-LENS OPTICAL ARRANGEMENT**

(71) Applicant: Giroptic, 59000 Lille (FR)
(72) Inventor: OLLIER, Richard, 59110 La Madeleine (FR); DE ROCQUIGNY DU FAYEL, Arnould, 59000 Lille (FR)
(74) Representative: Grünecker Patent- und Rechtsanwälte PartG mbB

(57) **Abstract**

An optical system (700) for capturing images for an image stitching device, comprising two optical arrangements (710, 720), namely a first optical arrangement (710) and a second optical arrangement (720), wherein each optical arrangement comprises a plurality of lenses (701, 702; 704, 705) including a head lens (701; 704) and an image sensor (703; 706) located on the same optical axis,the first optical arrangement (710) and the second optical arrangement (720) are located beside each other and the image sensor (706) of the first optical arrangement (710) is located at the head lens (701) of the second optical arrangement (720) and the image sensor (703) of the second optical arrangement (720) is located at the head lens (704) of the first optical arrangement (710).

## Description

The invention relates to an optical system which may be used with a personal electronic device for capturing spherical video images.

### BACKGROUND OF THE INVENTION

In the field of image capturing and motion picture capturing, cameras are implemented in a variety of personal electronic devices, such as mobile phones, tablets, laptops, wearable equipment (such as watches) and similar electronics devices. These cameras have a wide range of technical features and implementations. Crucial quality criteria for cameras are their spatial and temporal resolution as well as features of their optics such as the field of view.

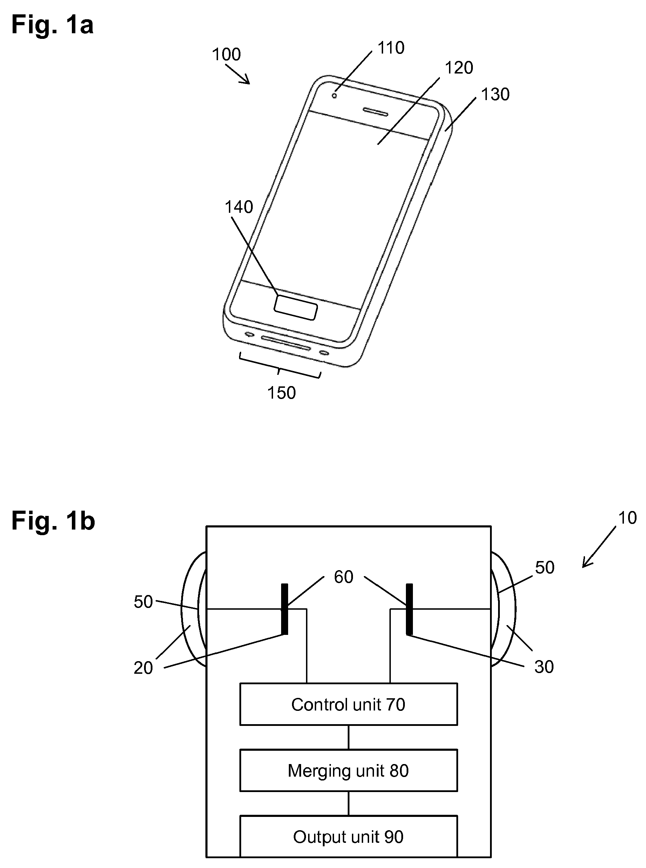

Figure 1 illustrates a front view of a personal electronic device 100 which is a smart phone. Typically, such smart phone has a body 130, a display portion 120, a front camera 110, a user interface 140 (a part of which may also be the display portion 120 with a touch screen), and further input/output portions 150 such as various connector slots and openings, a microphone, a speaker or the like.

Most personal electronic devices such as the smart phone illustrated in Fig. 1 have two individual cameras, one front camera 110 on the front side of the device 100 and another one on its back (not shown). The camera on the back side of the device usually provides pictures with higher spatial resolution compared with the front camera 110 on the front side of the mobile phone. The backside camera aims at capturing pictures of the view in front of the user: the user holds the smart phone so that the display 120 shows the scene viewed by the backside camera located on the opposite side of the display. The front camera 110 is located on the same side of the smart phone as the display 120 and aims at capturing the view possibly including the user. The back (on the side opposite to the side with the display) and the front (the same side as display) cameras are used alternatively, which means that at a time, only one camera is capable of taking images.

Usually, personal electronic devices provide a zoom function and the usage of flashlight only for the camera on the backside.

To satisfy the design constraints of flat devices, the cameras implemented in mobile phones, tablets and the like have a limited field of view, which are nevertheless suitable for many common applications. In particular, if the phone should be as thin as possible, then only a limited number of tiny lenses without strong curving can be built-in.

Furthermore, personal electronic devices are generally not capable of capturing spherical videos. There are only applications available which enable the user to capture different images from his location and reconstruct a panorama image based thereon.

In the field of image capturing, acquiring a 360° field of view or a spherical view is possible by juxtaposition and digital stitching of several images obtained by means of two or more lenses distributed around a circle or a sphere or other extended structure. However, these cameras are stand-alone cameras which only provide possibility to transfer captured video over a standardized interface to a computer (which may be a personal electronic device) or a cloud for storing. Such cameras are typically rather large especially due to the plurality of lenses and the entire processing including image processing, stitching, compression, storage, audio processing and equipment/interfaces to networks or other devices.

### SUMMARY OF THE INVENTION

The aim of the present invention is to overcome the aforementioned drawbacks by proposing a compact optical system which may advantageously be used also for a personal electronic device to capture images and videos.

This is achieved by the features of the independent claims.

Further advantageous embodiments are subject matter to the dependent claims.

According to an aspect of the present invention, an optical system is provided for capturing images, comprising two optical arrangements, namely a first optical arrangement and a second optical arrangement, wherein each optical arrangement comprises a plurality of lenses including a head lens and an image sensor located on the same optical axis, the first optical arrangement and the second optical arrangement are located beside each other and the image sensor of the first optical arrangement is located at the head lens of the second optical arrangement and the image sensor of the second optical arrangement is located at the head lens of the first optical arrangement.

In the optical system, the image sensor of the first optical arrangement is advantageously located at the back side of the head lens of the second optical arrangement and the image sensor of the second optical arrangement is located at the back side of the head lens of the first optical arrangement.

The back area of the head lens of the first optical arrangement and the back of the image sensor area of the second optical arrangement may overlap when viewed in the direction of the optical axis of the first optical arrangement.

Each optical arrangement may have a field of view of at least 180°. Accordingly, simultaneous capturing of two images which can be stitched to form a spherical image is possible.

According to an embodiment, the optical axis of the first optical arrangement is rotated by a predefined rotation angle with respect to the optical axis of the second optical arrangement around a virtual axis common to both the optical axis of the first optical arrangement and the optical axis of the second optical arrangement.

Alternatively, the optical axis of the first optical arrangement and the optical axis of the second optical arrangement are mutually parallel and located in the same plane.

According to an aspect of the invention, an image capturing device is provided comprising the optical system as described above; a controller for controlling the optical system to capture images with both optical arrangements in parallel and in particular simultaneously; a processing unit configured to merge the images captured by the two respective optical arrangements into a merged image; and an interface for transmitting the merged image to another device.

The processing unit may be further configured to process the images captured by the two respective image sensors by at least one of white balancing, gain control, exposure control, or dewarping.

The processing unit may be further configured to process the merged image by the two respective image sensors by at least one of white balancing, gain control, exposure control, or dewarping.

The image capturing device may further comprise an encoding unit for compressing the merged image.

The controller may control the two optical arrangements to capture respective sequences of images and the capturing of an N-th image by both optical arrangements, N being an integer, is performed in parallel with merging and/or processing of an (N-m)th image, m being an integer equal to or larger than 1.

The image capturing device may be an external device connectable to a personal electronic device, namely one of a mobile phone, a smart phone, a tablet, a laptop or a smart watch; further comprising an output unit configured to transmit merged images using the interface to the personal electronic device.

The interface may be one of a wireless interface, a cable or a connector and the capturing of images is performed in parallel with transmission of the images.

Alternatively, or in addition, the image capturing device may be a personal electronic device, in particular one of a mobile phone, a smart phone, a tablet, a laptop or a smart watch.

The personal electronic device may have a front side with a display device and a back side; and the optical system is integrated in the personal electronic device, wherein the head lens of the first optical arrangement is accommodated on the front side and the second optical arrangement is accommodated on the back side.

According to another aspect of the present invention, an image capturing apparatus with substantially spherical field of view and connectable or connected or integrated with a personal electronic device, the apparatus comprising: at least two optical arrangements oriented in different respective directions, each of the optical arrangements covering a part of a sphere and comprising a lens and a sensor for capturing the light coming through the lens, the at least two optical arrangements covering a substantially spherical field of view; a control unit for controlling the at least two optical arrangements to capture at least two video sequences of images provided by the at least two optical arrangements in parallel; a processing unit for merging the at least two video sequences of images to form a single sequence covering spherical view during the capturing of the respective at least two video sequences of images; and an output unit for outputting to the personal electronic device the images of the merged sequence during the capturing of the respective at least two video sequences of images.

Advantageously, the processing unit is further configured to perform stitching of the at least two video sequences of images to form a single sequence of spherical images within a time shorter than a time period between capturing of two consecutive images. Alternatively, the stitching task is performed in a plurality of processing stages, of which each is shorter than or equal to the time between capturing two successive images of a video sequence, wherein the successive images are processed in parallel by the plurality of stages.

Alternatively, or in addition the number of pixels to be read-out from the sensors or the number of pixels read-out from the sensor to be processed by the merging unit is reduced in order to speed-up the processing following image capturing.

The processing unit may further be configured to apply at least one of gain control, white balance, gamma control, denoising or sharpening to the merged images before outputting them via the output unit.

The processing unit is further configured to process the images of the two sequences of images captured by the respective two optical arrangements by at least one of gain control, white balance before being merged or stitched.

The image capturing apparatus can also comprise an encoding unit for compressing the merged image output from the processing unit.

The image capturing apparatus comprises, according to an embodiment, two optical arrangements with respective at least half-sphere fields of view oriented in opposite directions, each optical arrangement having a lens with a field of view of at least 180 degrees.

The two optical arrangements, namely a first optical arrangement and the second optical arrangement, are advantageously located beside each other. Moreover, the sensor of the first optical arrangement is located at the back side of the head lens of the second optical arrangement and the sensor of the second optical arrangement is located at the back side of the head lens of the first optical arrangement.

The image capturing apparatus may further comprise a connection means to enable a connection with the personal electronic device, the connection means being at least one of:
- a socket for engaging a first side of a plug adapter of which another side matches a socket of the personal electronic device,
- a conductive wire fixed with its one extremity at the image capturing apparatus and having on another extremity a connector for the personal electronic device, and
- a wireless network interface,

Moreover, the output unit is also configured to output the images over the connection means and the connection means is configured to allow for receiving power supply from and/or receiving from and/or transmitting data to the personal electronic device.

According to an embodiment, the image capturing apparatus further comprises a housing with an essentially spherical shape including openings for the lens of each optical arrangement.

According to an aspect of the invention a personal electronic device is provided, which include a display device and the image capturing apparatus as described above.

According to an embodiment, at least head lenses of the respective optical arrangements are mountable and demountable, for being mounted over light input areas provided in the personal electronic device for entering the light towards the respective sensors of said optical arrangements.

The personal electronic device may comprise a camera controller configured to switch between usage of either one or both optical arrangements for capturing videos or images.

According to an aspect of the invention, a system is provided comprising a personal electronic device and an external image capturing apparatus, wherein the personal electronic device comprises a processor which is configured to receive the merged video images from the image capturing apparatus and to apply at least one of gain control, white balance, dewarping and stitching and compression to the merged image.

According to a further aspect of the invention, mountable lens arrangement is provided for being mounted on a personal electronic device as described above, comprising: an attachments means with two lens arrangements for demountable mounting the two lens arrangements onto the light input areas adapted to guide light to the sensors of the respective optical arrangements, wherein each lens arrangement comprises at least a head lens.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

The above and other objects and features of the present invention will become more apparent from the following description and preferred embodiments given in conjunction with the accompanying drawings in which:
- Figure 1a: is a schematic drawing illustrating a smartphone with a camera;
- Figure 1b: is a block diagram illustrating an image capturing apparatus;
- Figure 2: is a schematic drawing illustrating a smartphone with an external spherical capturing device connected thereto via an adapter including a cable;
- Figure 3a: is a schematic drawing illustrating a smartphone with an external spherical capturing device connected thereto via an adapter without a cable;
- Figure 3b: is a schematic drawing illustrating a smartphone with an external spherical capturing device connected thereto wirelessly;
- Figure 4: is a schematic drawing illustrating a smartphone connected with a cloud and with an external spherical capturing device connected thereto;
- Figure 5a: is a schematic drawing illustrating a personal electronic device with two half-spherical lenses built-in to capture spherical images;
- Figure 5b: is a schematic drawing illustrating a personal electronic device with two mountable half-spherical lenses to capture spherical images;
- Figure 6: is a block diagram illustrating functional structure of the image capturing apparatus;
- Figure 7a: is a schematic drawing illustrating arrangement of two optical arrangements and the light path through it;
- Figure 7b: is a schematic drawing illustrating two variants of mutual position of the optical arrangements;
- Figure 8a: is a schematic drawing illustrating an optical arrangement on a single axis;
- Figure 8b: is a schematic drawing illustrating an optical arrangement on two axes;
- Figure 9: is a flow diagram illustrating an example of processing of the captured images;
- Figure 10: is a flow diagram illustrating an example of processing of the captured images;
- Figure 11: is a flow diagram illustrating an example of processing of the captured images;
- Figure 12: is a block diagram illustrating functional structure of a PED with integrates camera;
- Figures 13A-D: are schematic drawings illustrating embodiments of mountable lens arrangements; and

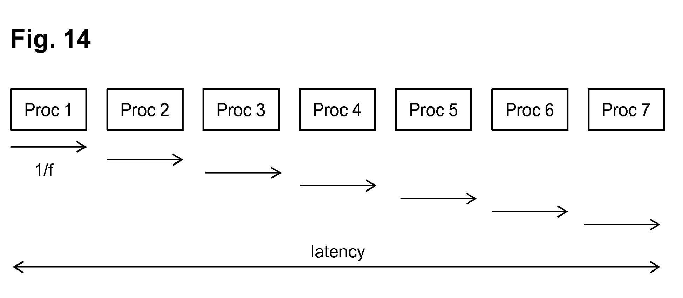

- Figure 14: is a schematic drawing illustrating exemplary timing of different processing stages.

### DETAILED DESCRIPTION

The present disclosure relates to a compact optical system of two optical arrangements for capturing images or videos. The present disclosure also relates to an image capturing apparatus with a substantially spherical field of view and connectable or connected with a personal electronic device, which may also embody the compact optical system.

Such image capturing apparatus 10 is shown in Figure 1 b may comprise at least two optical arrangements 20, 30 with different respective fields of view, each of the optical arrangements covering a part of a sphere and comprising a lens 50 and a sensor 60 for capturing the light coming through the lens, the at least two optical arrangements covering substantially a spherical field of view. It is noted that a head lens may also be covered by a transparent protection cover.

The term "substantially" is employed to account for some minor blind spots in the spherical field of view, which may be caused by some misalignments of lenses or the like. Moreover, for instance, portions of the captured scene may include the support of the image capturing device rather than the scene.

The image capturing apparatus may further include a processing unit comprising a control unit 70 for controlling the at least two optical arrangements 20, 30 to capture respective at least two sequences of images in parallel; a merging unit 80 for stitching the at least two video sequences of images to form a single video sequence of spherical images during the capturing of the respective at least two video sequences of images; and an output unit 90 for outputting to the personal electronic device the captured images.

The merging unit 80 performs stitching of the captured images by transforming the captured images into a desired projection which enables to merge them so that they form a continuous image of the scene. In particular, the fisheye projection of the captured images may be transformed into a flat projection enabling for stitching its boundaries with the boundaries of the other half-sphere. For the purpose of stitching, blending may also be applied, where the boundary pixels (and possibly further pixels close to the boundary) of the two stitched images are mixed with a predetermined ratio (for instance equal for both images).

In particular, the controlling of the two optical arrangements 20, 30 includes controlling the reading out of the two respective sensors 60. For instance, the control unit 70 provides timing for reading out the sensors and for providing the read-out video images to the merging unit for further processing. The timing is provided by means of a clock signal as is known to those skilled in the art. Advantageously, the control unit 70 synchronizes the reading-out from the two sensors so that both sensors are read-out at the same time. However, there may be some misalignments, so that a buffer may be provided in the image capturing apparatus used to buffer the read-out images. In this way, it is possible to provide the two captured video images together for the next processing stage at the timing also controlled by the control unit 70.

However, other implementations of timing (synchronization of images captured by the two sensors) are possible. For example, the reading-out from the sensors does not need to be performed at the same time and the control unit 70 may time them differently. The present invention is not limited by any particular sensor read-out synchronization timing.

In other words, the image capturing apparatus 10 is capable of parallel (in particular at the same time) capturing of images by the respective different optical arrangements 20, 30 and outputting them to the next processing stage based on the timing provided by the control unit 70.

In particular, in order to enable real-time operation, the processing unit is further configured to perform stitching of the at least two video sequences of images to form a single sequence of spherical images within a time shorter than a time period between capturing of two consecutive images (or multiples of this time). In order to achieve this, the frame rate of the stitched images may be reduced with respect to the frame rate of capturing the images. However, this approach is efficient merely for previews or in applications which then use the remaining images for an improve stitching offline.

When having a predetermined stitching processing as well as a predetermined output frame rate (frame rate of the stitched video), the real-time operation may further be performed by reducing the number of pixels to be read-out from the sensors. This reduction requires a controller and corresponding sensors capable of selectively reading-out only pixels within a desired region of interest.

Alternatively or in addition, the real-time operation may be achieved by reducing the number of pixels read-out from the sensor to be processed by stitching. In other words, the stitched images have a smaller resolution than the captured images.

It is noted that the next processing stage may be stitching and may be performed at the image capturing device as described above. However, the present invention is not limited thereto and the processing unit may perform merely a merging of the captured images and outputting the merged image for further processing to the PED, which then performs the stitching. If the stitching at the external device (PED) is to be performed in real time, than the merging must be performed within a time period smaller than the frame rate of the merged images.

The PED may then perform stitching in real time, which means within a time period smaller than the inverse of the frame rate of the stitched image. There may be latency between capturing a frame and actually stitching it at the image capturing devise or the PED. As explained above, in order to enable real-time operation for a given frame rate and stitching algorithm, the number of pixels read-out or used from the read-out images may be adjusted. In particular, in order to enable adaption of the performance to different PEDs, the image capturing device may enable user to configure the spatial resolution and temporal resolution (frame rate) to be output.

The reduction of the number of pixels may be performed, for instance by leaving out columns and/or rows of pixels.

Alternatively, the image processing device may perform parallelization and be configurable to stitch the images of the video sequence to a spherical image in a plurality of processing stages, of which each is shorter than or equal to the time between capturing two successive images of a video sequence, wherein the successive images are processed in parallel by the plurality of stages. The term "in parallel" may mean simultaneously. However, due to timing misalignments and possibly different task durations, it may also mean that the processing periods of different images in two or more stages overlap.

It is noted that the parallelizing of the processing stages is advantageously also performed fur further processing tasks or among different tasks. For instance, the processing may be parallelized so that one or more processing stages of different tasks such as merging, dewarping, white balance or compression are performed in parallel for different images.

The fields of view of the optical arrangements in any of the embodiments of the present invention may be overlapping.

### Connection of an independent (external) image capturing device to the PED

Such image capturing apparatus 10 may be external with respect to the personal electronic device (PED). It is noted that the PED may be a mobile phone, a smartphone, a tablet, a laptop or computer or any other kind of electronic device.

According to an advantageous embodiment, the image capturing apparatus has two optical arrangements with respective at least half-sphere fields of view in opposite directions, each optical arrangement having a lens with a field of view of at least 180 degrees, also called fisheye lenses. This arrangement provides a possibility of a compact design for the external image capturing apparatus (separate device from the PED, which may be provided as an accessory for the PED or a plurality of PEDs such as smartphones, smart watches, tablets or the like).

In order to connect to the personal electronic device, the image capturing apparatus may further include connection means.

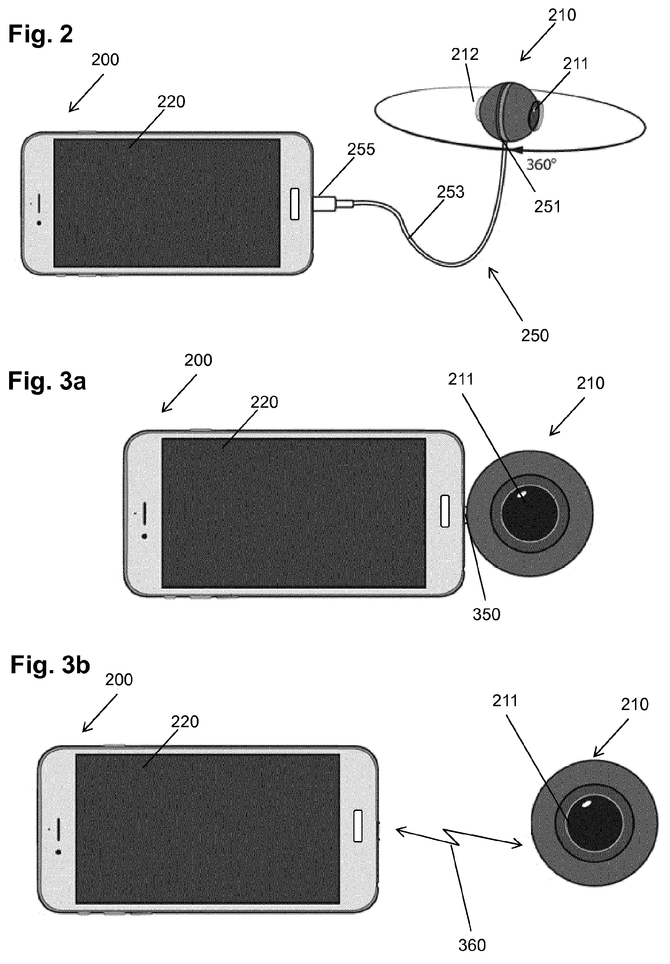

Figure 2 illustrates an exemplary external image capturing device, i.e. a capturing apparatus which is independent from the PED but is connectable or connected therewith.

The external image capturing apparatus 210 connected via an adapter 250 to a PED 200, in this embodiment a smartphone with a display 220. The image capturing apparatus 210 includes two fisheye lenses 211 and 212, each of which captures at least 180 degrees and preferably, at least the entire half-sphere, meaning that one lens can capture 360 degrees horizontally and 180 degrees vertically. Together they enable the image capturing apparatus 210 to capture spherical images. The image capturing apparatus 210 is connected via its connection means with an adapter 250. The connection means may be a socket for engaging a first plug 251 on one extremity of the adapter 250 of which the second plug 255 of the other extremity matches a socket of the personal electronic device 200.

In Figure 2, the adapter 250 has a cable 253 with the two plugs 251 and 255, one for the image capturing apparatus and the other for the PED. The two plugs 251 and 255 may be the same or different from each other, depending on the particular PED to be connected with. Using of an external (pluggable) adapter increases the interoperability of the image capturing apparatus with various devices since the image capturing apparatus may be connected in this way with any other PED using an appropriate adapter (with a plug matching the particular PED). The connectors at the image capturing apparatus and/or at the PED may be standardized connectors such as an USB, iPhone/iPad connector, or the like. However, the image capturing apparatus 210 may also have a different, proprietary socket for a corresponding plug.

However, it is noted that Figure 2 is only an example. The connection means may also be formed by a cable fixed with its one extremity at the image capturing apparatus 210 and having a plug 255 only on the other extremity of the connector for the personal electronic device. The adapter or connection using a cable provides a positioning of the imaging capturing apparatus that is independent of the position of the PDE.

Figure 3 illustrates another exemplary connection between the image capturing apparatus 210 and the PED 200, namely via a second embodiment of an adapter 350. The adapter 350 according to this embodiment is a connector without cable 253. Such connector may be beneficial especially for hand-free operation of the image capturing apparatus. It enables to not only interconnect the image capturing apparatus 210 with the PED 200 but also to fix the position of the image capturing apparatus on the PED. Thus, the PED with the image capturing apparatus connected in this way, may be easily manipulated as a single camera.

According to a further embodiment, since the PED 200 may support one or more types of wireless connection 360, such a connection may be used for connection with the image capturing apparatus 210. In such case, the image capturing apparatus 210 can, in addition or as a variant, include a wireless network interface (not shown) as the connection means. The wireless network interface may be for instance a BlueTooth, WiFi or any other wireless standard having sufficient capacity to transfer the captured images/video. In this case one may still want to use a connecting element that allows to attach or connect the image capturing device with the PED. In other words, a connecting element such as a plug for a socket provided on the PED may be used to attach the image capturing apparatus with the PED without providing possibility of exchanging data over such element. The connecting element may have two plugs, one for the PED and one for the image capturing device. The plugs are advantageously connected so that the connecting element is rigid and provides a stabile attachment to the PED. An advantage is that the image capturing device connected to the PED in this merely mechanical manner may be operated by a used as a part of the PED.

The above exemplified types of connection between the image capturing apparatus and the PED may also be supported all, or some of them. For instance, the image capturing apparatus may have a connection means including a plug for an adapter (with or without cable), connecting element, and/or additionally support connection via wireless interface. In other words, the above described embodiments are combinable.

The output unit 80 of the image capturing apparatus 10, 210 is configured to output the images over the connection means 250 to the PED.

Via the connecting means 250, 350 or 360, like illustrated in Figures 2 and 3, the image capturing apparatus 210 can transmit data, either only sending data to the PED 200 or sending and receiving data to/from the PED, but can also receive from the PED its power supply to power the image capturing apparatus 210 directly or via chargeable batteries in the image capturing device.

It is noted that the image capturing apparatus may also be connected or connectable to any power supply different from the PED. For instance, the cable or the adapter mentioned above may also enable connection to an accumulator or to an adapter connected with the power supply network or to any device providing power supply output.

Moreover, the above examples are not to limit the present invention. The connection means may also be implemented in another way. For instance, the connection may be an inductive connection used for power supply and/or charging and for exchange of some data. In such case, the PED or another device may provide or be operated as a wireless charger for the image capturing apparatus. As mentioned above, the data exchange between the PED and the image capturing apparatus may also be implemented via a wireless connection.

It is noted that a wired connection may be beneficial since no additional volume for wireless communication or power supply would be necessary inside the image capturing apparatus 210. This may enable a more compact design of the image capturing apparatus. The image capturing apparatus 210 may then use the PED 200 to transmit the data to further devices, e.g. to the internet or a cloud storage.

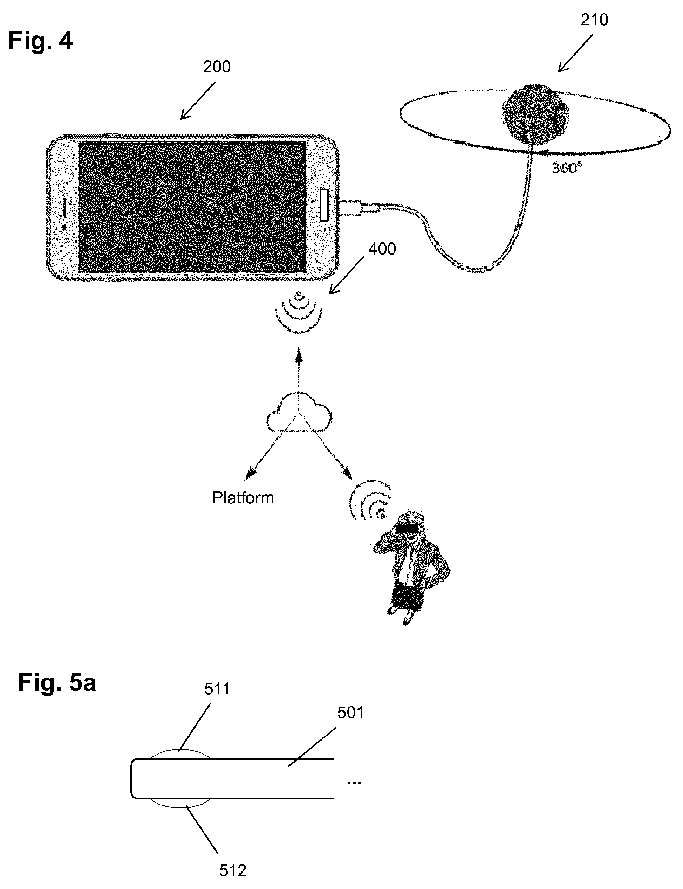

Figure 4 shows an example in which the image capturing apparatus 210 is connected via the adaptor 250 to the PED 200, like illustrated in Figure 2. Like already described, the image capturing apparatus 210 may receive its power supply and/or be charged via this connection. Via the same connection, the image capturing apparatus sends captured images to the PED In particular, the image capturing apparatus 210 may employ its output unit 90 to transmit captured images to the PED 200. These may advantageously be the already stitched captured images. Alternatively, the images may be merely merged, i.e. arranged side by side as they were captured. The images are then stored and/or processed in the PED 200 and/or transmitted using an output interface 400 of the PED 200 to an external storage 410.The PED 200 may include one or more interfaces 400 to an external storage 410 The interface 400 may be any wireless or wired interface. The wireless interface 400 may be for instance a WiFi (i.e. supporting one of the IEEE 802.11 standard family), BlueTooth, WiMAX, LTE or the like. It may be any interface to a network to which the external storage is connected, including any wired connection such as connection with a local network, local access network, wide area network, Internet or the like.

In Figure 4, the example employs a wireless connection between the PED 200 and the external storage 410, in this example being a cloud based storage. From the cloud, the stored captured images may be accessed by various applications 420, such as YouTube, facebook, etc. or directly by a user for viewing. The viewing of spherical images may be performed with special glasses/headset 430, e.g. Virtual Reality glasses, as schematically illustrated in the figure or via an app / software on a display of an electronic device used by the viewing user (PC, laptop, smartphone, tablet, projector, etc).

In other words, according to an embodiment of the invention, a system is provided including the image capturing device as described above, a PED and an external storage. The PED may be connected to the external storage and store the captured images therein, but may also or alternatively store the captured images (video) locally, i.e. in its own built-in memory. Especially in case of capturing high-resolution spherical video, it may be beneficial for smaller PEDs to employ an external storage since the built-in storage capacity may be limited. This is especially the case for the PEDs which are smartphones, smart watches or tablets. If the PED is a laptop or generally a computer with a sufficient storage, the captured video may also be stored locally.

It is noted that although Figure 4 illustrates wireless connection of the PED with the image capturing apparatus as shown in Figure 2, any other connection such as those shown in Figures 3a and 3b or other, may be equally supported.

In addition to the connection with the PED, according to a variant, the camera may also implement an interface to directly transfer data, e.g. captured images, to an external storage. The external storage destination (address) may be configurable by using the PED. For instance, the PED may be equipped with software (e.g. an app) for configuring the image capturing device. The configuration may include various parameters such as spatial and temporal resolution of the sequences of images to be captured, input of some meta data (such as user description of the captured sequence), compression level (i.e. quality of the captured images), compression type (such as codec to be employed to compress the images, e.g. H.264/AVC or the like) and further settings of the codec, settings for audio recording and compression (if audio is also captured), storage address for storing the captured video and/or audio, GPS data or Gyroscope data for orientation or the like.

In other words, the image capturing device may further comprise an input unit for receiving from the PED data such as configuration data related to features of the images to be captured and/or settings concerning storing or transmitting the captured images.

The image capturing apparatus illustrated in Figures 2 to 4 has a housing with a spherical shape and including openings for the lenses. A housing of this shape is particularly compact and leaves space for a broader field of view of the lenses than 180 degrees. However, the present invention is not limited by this shape of the housing. The housing may also have any other shape which does not limit the field of view of the image capturing device lenses. For instance, the housing may have an ellipsoid rather than circular cut or may have a completely different shape such as a cylindrical with cameras located on the flat sides thereof or cuboid, or any other shape.

The above described examples show an external image capturing device connectable with the PED. An advantage of such image capturing device is that it can cooperate with any PED without compromising the design of the PED and still provide spherical capturing possibility using the display and/or other user interface parts and/or processing parts of the PED which on the other hand keeps the image capturing device compact. The PED may also perform some processing steps on the captured images. The possibility of sharing PED functionality (other than display and communication interfaces) will be discussed in more detail later on.

### Image capturing device integrated in the PED

However, the image capturing apparatus of the present invention is not limited to be an external device. In general, the image capturing device may also be partly or entirely integrated within the PED. This approach on the other hand provides a possibility of using the built-in optical arrangements of the PED as well as larger portions of its processing power. This may be especially interesting for more powerful PEDs such as personal computers or laptops, but can also be used with tablets and smartphones.

In particular, "integrated" means that at least part of the image capturing device is included in the PED housing together with further PED components such as processor and communication means.

Figure 5a shows schematically a portion 501 of a PED (such as a smartphone or a tablet) on which two lenses 511 and 512 of the respective two optical arrangements are arranged, each one of the optical arrangements providing a field of view of at least 180 degrees. The PED has the image capturing device 10 of Figure 1b integrated. In particular, the lenses 50 of the image capturing device correspond to the respective head lenses 511 and 512 illustrated in Figure 5a. The lenses provide light to the sensors 60 which are further connected to the control unit 70, merging unit 80 and output unit 90 - all integrated within the PED. These units may be implemented by one or more processors of the PED running the corresponding software.

In other words, a PED according to an embodiment comprises a display device 200; two optical arrangements 20, 30 with respective at least half-sphere fields of view in opposite directions, each optical arrangement 20, 30 having a lens 50 (for instance 511, 512 in Fig. 5a) with a field of view of at least 180 degrees, also called fisheye lens, and comprising a sensor 60 for capturing the light coming through the lens 50; a control unit 70 for controlling the at least two optical arrangements 20, 30 to capture respective at least two sequences of images in parallel; and a merging unit 80 for merging or stitching the at least two sequences of images to form a single sequence of spherical images during the capturing of the respective at least two sequences of images. The output unit 90 may be provided for outputting the merged images either for further processing such as stitching or the stitched images for displaying on the display 200, storing or transmission.

The PED may further comprise a communication unit configured to transmit and/or receive data to/from the network such as LAN, WLAN, cellular network, Internet or the like. The communication unit may be used for transmitting the captured and merged images via network to a predetermined destination. The destination maybe entered by the user or preconfigured.

### External fisheye lenses

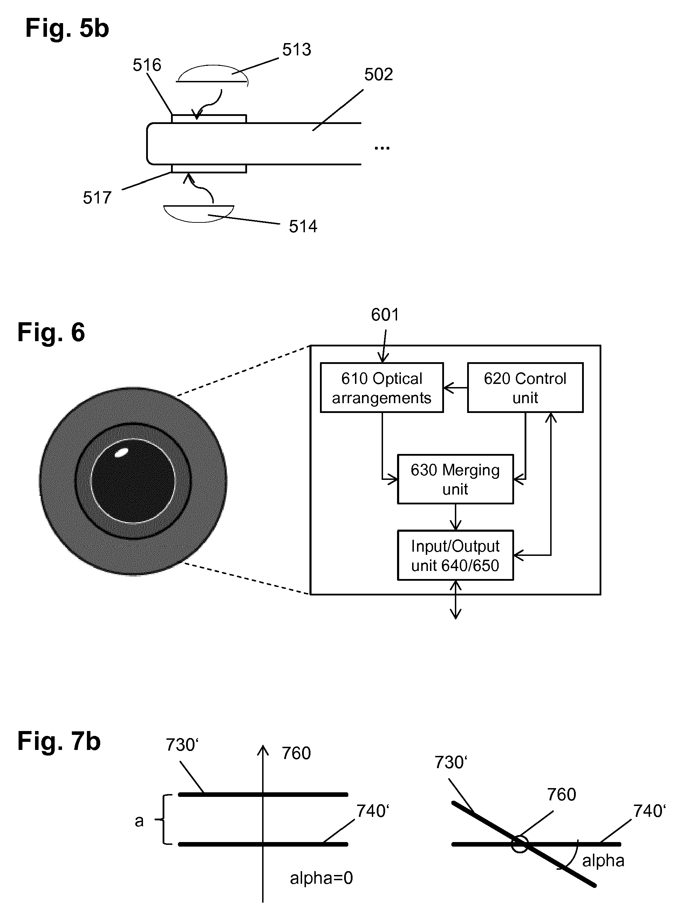

Figure 5b illustrates a second embodiment of the image capturing device integrated within the PED. In this embodiment, the PED with a front and back camera having a narrower field of view (i.e. a field of view smaller than 180 degrees, i.e. smaller than a half-sphere), is turned into a PED (see portion 502 of the PED) with spherical imaging capability by mounting two lens arrangements 513, 514 each with a field of view of at least 180° over the front and back camera.

Thus, in this second embodiment, only a part of the image capturing device 10 as described with reference to Figure 1 b is integrated. Namely, the image capturing device 10 is integrated into the PED without the head lenses 50 which provide the half-sphere view. The optical arrangements 20, 30 in this second embodiment thus include the image sensors 60 and may further include various lenses on the respective optical paths to the sensors. However, these optical arrangements 20, 30 do not provide the half-spherical view without the lens arrangements 513, 514. Each lens arrangement 513, 514 includes a head lense and possibly further lens(es).

The fisheye lens arrangements 513 and 514 can be mounted on the PED portion 502. This is indicated in the figure by areas 516, 517 on each side of the PED portion 502 The mounting locations 516, 517 are the locations of the two built-in PED cameras (image capturing devices with a field of view smaller than a half-sphere), namely a front camera and a rear camera.

The present invention is not limited to any particular mounting means. The lens arrangements 513 and 514 may be located on a clip which may be clipped around the PED. An advantage of the clip is that no particular means are necessary on the PED itself. However, other mounting means may be provided.

For instance, the fisheye lenses may be embedded within a frame adapted to be engaged with a frame surrounding the location of the built-in parts of the optical arrangements 20, 30. The engagement maybe achieved for instance by screwing or by pushing at least partially elastic lens frame over or inside the frame surrounding the mounting area.

Providing external lenses may increase the flexibility in using the built-in cameras. In particular, the built-in cameras may still be used as in the current applications, namely for capturing images or videos with either the rear-side camera or the front-side camera the use of our narrow field of view. On the other hand, the PED may be provided with the capability of capturing still or video images in parallel with both built-in cameras. When fisheye lenses are mounted, the PED processing device may be used to perform stitching of the respective images captured by the built-in cameras receiving light through the fisheye lenses.

Thus, in summary, according to this second embodiment, the lenses (some of the lenses group, which provide wide-angle view) of the respective optical arrangements are mountable and demountable lenses for being mounted over a light input area of the respective optical arrangement parts built-in in the personal electronic device.

Such lenses may be provided separately and be separately or together mountable of the respective light input areas located on the front side of the PED (the site including a display) and the opposite side. However, as explained above, the present invention is not limited thereto and the mountable and demountable lenses may be provided on arms of a clip adapted to be clipped on the PED so that the clip arms are respectively located on the front side and the back side with the respective lenses covering the light input areas of the PED's optical arrangement portions.

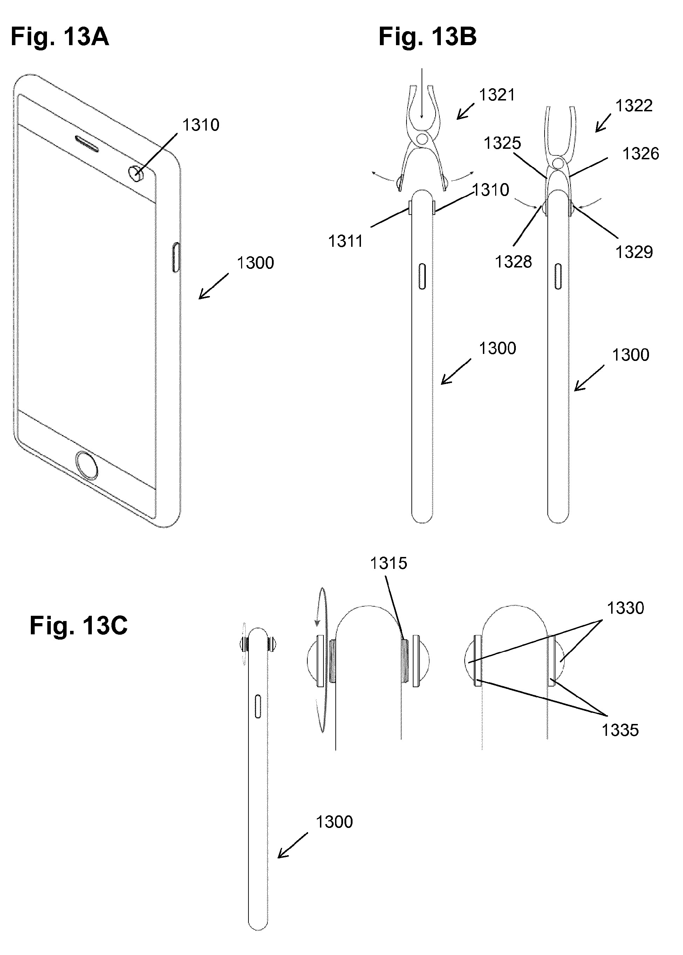

Figures 13A-D illustrate exemplary embodiments of the mountable lens arrangement for being mounted on a personal electronic device (such as described above), comprising: an attachment means with two lens arrangements for demountable mounting the two lens arrangements onto the light input areas adapted to guide light to the sensors of the respective optical arrangements, wherein each lens arrangement comprises at least a head lens.

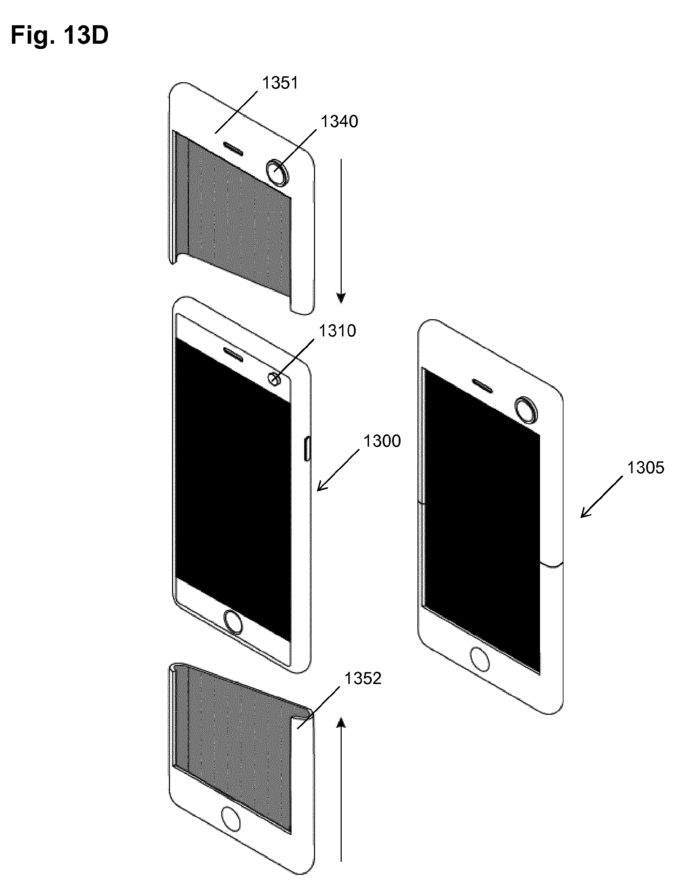

In particular, Figure 13A shows a PED 1300 with a built-in front camera 1310. The PED has a corresponding rear built-in camera on the other side. This is illustrated in the side view of the PED 1300 in Figure 13 as camera 1311. Figure 13B further shows that the mountable lens arrangement may be a clip 1320, which is shown in an open state 1321 and in a clipped state 1322. The clip has two arms 1325 and 1326 which have embedded the lenses 1328, 1329 to be clipped over the respective cameras 1310 and 1311. The clip may include around the lenses a soft material for instance made of a rubber, textile or silicone which may protect the housing of the PED. Moreover, the clip may include a spring or another mechanism for maintaining the clip clipped in the position 1322.

Figure 13C shows an exemplary embodiment of the mountable lens arrangement which comprises a pair of lenses 1330 embedded within rings 1335 which have in their inner side a screw thread for being mounted on a matching screw thread 1315 on the PED. The rings 1335 of the lens pair 1330 may be interconnected with a flat portion such as a bow made of a flexible material such as textile, rubber or silicone in order to be kept as a pair and not to get lost. The bow may be attached to the ring in such a manner that it does not turn when the ring is turned (screwed). This may be achieved for instance by providing a channel on the outer side of the ring into which the bow is engaged.

Figure 13D provides another example of the mountable lens arrangement which is a PED cover (such as a smartphone cover) embedding the lenses 1340 on the position corresponding to the light input of the built-in cameras 1310. The cover may be slidable as shown in Figure 13D. The lenses are arranges on the front 1340 part of the cover corresponding to the front camera and a rear part of the cover (not shown) corresponding to the rear camera. In Figure 13D the cover has two parts: a top part 1351 and a bottom part 1352, which may be advantageously engaged or attached (not shown) one to another when in the final position as shown by the arrow 1305 illustrating the PED with the cover on. Thus, the cover parts 1351 and 1352 may be slided onto the PED. The slidable positioning on the PED provides for a stability and ensures that the lenses are positioned correctly over the built-in cameras.

However, it is noted that the PED cover may also be made of flexible material which is wearable on the PED in a manner different from sliding.

In order to facilitate this, the PED may comprise a controller for controlling the usage of the different optical arrangements (at least partly formed by the built-in camera portions such as sensors, lenses in the optical path to word the respective sensors and the like). This controller may be implemented in software running on a processor of the PED. In particular, for the purpose of spherical capturing, respective sensors of both optical arrangements may be controlled to capture in parallel the images. However, the controller may also control the PED to employ only one of the optical arrangements to take still images or video sequences. Selection of the front or rear optical arrangement by user may also be possible. In other words, the controller may be configured to receive a user input entered via a user interface of the PED and to select either one of the optical arrangements or both of them to capture still images or videos and possibly to perform or not perform stitching of the images captured by both cameras in accordance with the user input. In other words, camera control application executed on a processor of the PED make me enable the user to select camera or cameras for capturing the next image or video. Alternatively or in addition a separate application may be provided for capturing images or video with both cameras in parallel and/or for stitching such images or video.

### Processing of the captured images

A schematic and functional structure of the image capturing device is illustrated in Figure 6.

In particular, Figure 6 shows parts 601-650 of the image capturing apparatus as described above which may be an PED-external camera (as illustratively shown in figure 6) or which may be formed as a part of a PED, i.e. integrated in the PED. Such image capturing device receives light 601 to be captured with a first optical arrangement and a second optical arrangement 610 of which each includes at least a wide-angle lens with a field of view of 180 degrees or more and sensor for capturing the light coming through the lens. The first optical arrangement and the second optical arrangement preferably look into the opposite directions so that the image capturing device is capable of capturing substantially the entire sphere. The sensors employed in the optical arrangements may be for instance semiconductor charge-coupled devices (CCD) or complementary metal-oxide-semiconductor (CMOS) sensors.

The image capturing device further comprises a control unit 620 which is configured to control the capturing of the images or video sequences by the optical arrangements. In particular, the control unit 620 may control the timing of the capturing as well as further settings. The control unit may be embodied on a processor or a specialized hardware or programmable hardware circuitry being a part of the image capturing device. The captured images or sequences of images from the first optical arrangement and the second optical arrangement may be stored or buffered in a memory of the image capturing apparatus. The control unit may be advantageously implemented within the external image capturing device. If the image capturing device is a part of the PED, then the functionality of the control unit may be executed by a processor of the PED which may also perform other tasks concerning the image capturing device and/or the PED.

A merging unit 630 is configured to receive (directly from the optical arrangements or from a buffer or from a memory) and image captured by the first optical arrangement and the image captured by the second optical arrangement and to stitch these images into a single image covering the combined field of view covered by the optical arrangements. The operation of the merging unit may also be timed by the control unit 620.

The merging unit in the external image capturing device may perform stitching including dewarping of the captured images, i.e. perform the transformation of the captured fisheye projection into another projection and then merging or blending the transformed images. The transformation may be determined at the initial calibration during production based on the position of the optical arrangements. This may be performed for instance by capturing predefined template images and based on the captured images (distorthed by the lense-sensor projection, calculating inverse transformation to compensate for the projection. The target projection to be achieved may be a planar projection. An advantage of such configuration performing the stitching in the external capturing device is that the PEDs of some types (for instance smart phones or watches) may have a rather weak processing power (processor) to carry out the image or video stitching and possibly further perform further functions. It may thus be beneficial to provide a processor with the corresponding software (or a specialized / programmable hardware) for implementing the stitching, i.e. embodying the merging unit. On the other hand, if the processing power of the PED is sufficient to perform stitching of the images captured by the two respective optical arrangements, the merging unit in the external image capturing device may perform merging (i.e. merely joining two images into one as they are captured without any projection transformation or boundary matching) but not stitching.

The stitching may then be embodied within a processing unit in the PED such as a general processor which can also perform some other task such as PED tasks. In this way, the image capturing device may be even more compact. In such case, the captured images are provided to the output of the image capturing apparatus and over an interface to the PED where the stitching is performed and the stitched images are stored locally, displayed, or provided to an external memory (for instance over a network). Similarly, if the image capturing device is implemented within the PED as illustrated in the examples in Figure 5, the merging unit may also be embodied on one or more processor or processing circuitries of the PED.

The merged (stitched) images may then be provided to the output unit 650 which may provide them over and interface to the PED. As described above, the interface may be via a wireless using any available protocol. The output unit may be configured to encapsulate the data carrying the encapsulated images into a protocol supported by the interface over which the data are to be transmitted and transmitting the data over the interface.

As described above, according to the present invention, several different task sharing approaches may be implemented to share the tasks between the image capturing apparatus and the PED. In the following, we shall describe them in detail.

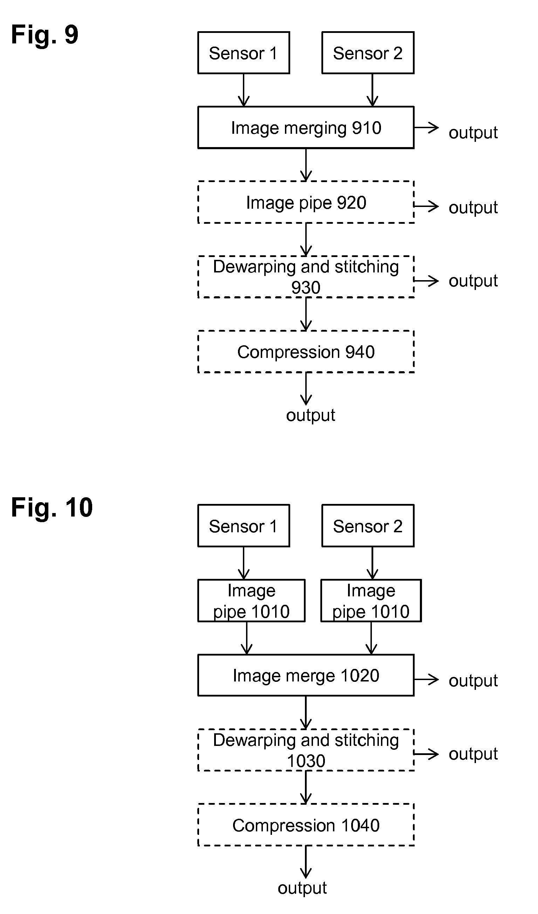

Figure 9 illustrates a block diagram according to an embodiment of the invention. The flow shown includes capturing the images by the two sensors of the optical arrangements according to the invention, the two sensors being denoted as sensor 1 and sensor 2, merging the two images and depending on the variant performing further processing such as image pipe processing, dewarping and stitching as well as encoding. Image pipe may include various operations such as white balance, gain control, or the like.

In this context, gain is an electronic amplification of the video signal. By means of the gain control, the image signal is boosted electronically, adding more voltage to the pixels read from the image sensor (CCD or CMOS) causing them to amplify their intensity and therefore brighten the image.

Further Color balance is a global adjustment of the intensities of the colors (typically red, green, and blue primary colors). The aim is an adjustment to render specific colors and, in particular neutral colors such as white in a perceptually pleasant manner. White balance thus changes the overall mixture of colors in an image and is used for correction of the various light conditions during capturing.

The "dewarping" here is used in the sense of being a part of the stitching. As described above, it means transforming the two captured images from the lens projection to a different projection to then blend or merge the dewarped images. Since dewarping may thus also include in the transformation some cropping especially in case the field of view is larger than 180 degrees. Accordingly, the dewarping is also capable of suppressing or reducing a warping effect caused by the lenses. Taking the same image at a finite distance introduces various distortions, such as warping (also called as "fisheye" effect) which causes horizontal and vertical lines captured to appear curved. This can be corrected by calibrating the disparity to determine a mapping which is then applied to compensate for the warping effect as described above during fabrication. Later recalibration may also be possible.

In particular, Figure 9 shows an embodiment in which the output of the two sensors of the respective two optical arrangements is merged in unit 910. The output of each sensor in this embodiment is an image in a raw format, i.e. a sequence of binarized pixel values scanned in a predetermined manner, for instance a row-wise. The image may include one or more colour components corresponding to the type of the sensor as is known to those skilled in the art. In the merging in unit 910, the two images from the respective two sensors (sensor 1, sensor 2) are merged together to form a single image covering the fields of view captured by both sensors. Advantageously, the merging is performed according to a pre-determined scheme. In particular, the image capturing device may store the mapping between the images taken from the two sensors and the resulting merged image. This mapping may be preset, for instance obtained by initial calibration of the image capturing device. However, the present invention is not limited to such calibration. Alternatively or in addition thereto, the mapping may be configurable. Such configuration may be performed for instance by an external device such as a computer, which may also be a PED with the corresponding software. Using of a predetermined scheme for merging the images provides the advantage of internal merging without the necessity of performing any complex operations initiated by the user. However, the merging could also be performed by determining and/or checking the correct alignment of the two images by image processing means such as boundary matching implemented by the processing unit

The merged image may be output to the PED using the output unit. This is illustrated in Figure 9 by the arrow to the right of the image merging 910. In case of capturing a sequence of images (video), the capturing by the two sensors and the image merging is performed cyclically and repeatedly. Preferably, the image capturing (i.e. reading-out the images from the sensors) is performed at the same time for both optical arrangements. In order to enable real-time operation and avoid introducing a large buffer into the image capturing device, the image merging 910 must be performed fast. In particular, if the image capturing device does not have extensive buffer and outputs the captured and merged images directly to the PED for real-time displaying, the merging should not take more time than capturing of the images in order to enable outputting merged image as soon as two new images are captured by the respective cameras. However, such operation may be difficult to implement since the synchronization as well as sensor reading-out operations are implemented by a circuitry which may have some inaccuracies. Accordingly, the image capturing device preferably has a buffer to store one or more captured frames.

In general, in order to enable a real-time operation, there still may be latency between the capturing of the frame image and outputting the stitched and processed frame. However, the stitching operation should not take longer than the time between two output stitched images or the stitching operation may be subdivided in a plurality of processing stages, of which each takes shorter than or equal to the time between capturing two successive images of the video sequence. The successive images are processed in parallel by the plurality of stages.

Otherwise, the processing delay grows and the processed images cannot be output with the desired output frame rate.

As already described above with reference to Figure 1 b, the stitching (or a particular stitching stage) may take more time than the inverse of the capturing frame rate. In such case, the output frame rate (frame rate of the stitched images) may be smaller than the capturing frame rate. However, such capturing is ineffective if the captured images are discarded. Alternatively, they may be stored in the image capturing device or transmitted without stitching and stitched offline. A more efficient solution can be achieved by reducing the spatial resolution of the captured images before processing them. In particular, the number of pixels to be processed is selected in such a way that the selected number of pixels may be performed by stitching within the desired time between outputting two stitched frames. The desired time may be advantageously same as the time between two captured images.

Alternatively, or in addition, the stitching may be performed in two or more stages performed in the respective two or more time periods between capturing of two successive images. The stages are parallel so that in different stages, at the same time different images are processed.

A constant latency between capturing an image and outputting it processed (stitched) still enables real time streaming, since a continuous video stream is still output. For instance, the image merging and/or stitching and/or other processing stage of an Nth image may be performed at least partially during capturing of the (N+m)th composite images by the respective sensors 1 and 2, m being integer equal to or greater than 1 (and possibly during various processing stages of other images).

The timing considerations described above for the stitching apply equally for any other processing such as compression of white balance, gain control etc. For instance, white balance - if applied - should also be performed within a time period smaller than or equal to the inverse output frame rate or subdivided into a plurality of stages. However, it may be performed within such time period different from the one in which the stitching is performed. In this way, additional processing steps may increase latency, but may still be performed in real-time.

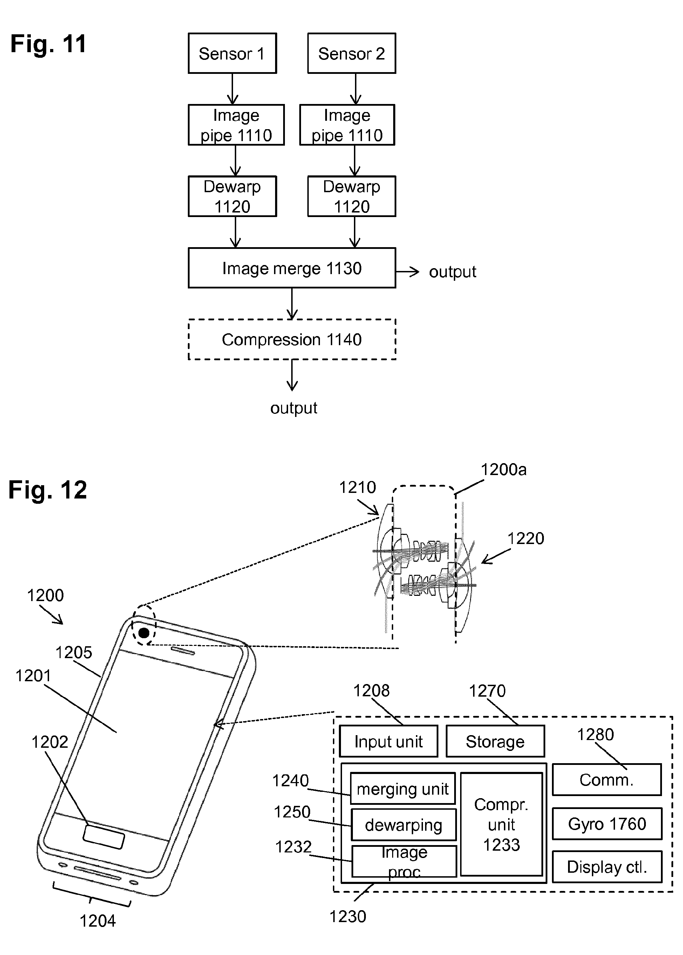

As described for the stitching above, some of the processing tasks may also also take a multiple of the time period between capturing two successive images. Figure 12 illustrates schematically a general timing of the processing according to an embodiment. Processing stages Proc 1 to Proc 7 are performed for a captured image consecutively and within the respective time periods of the duration 1/f, with f being the frame rate of outputting the processed video (advantageously corresponding to the frame rate of the image capturing). The seven processing stages thus cause a latency of 7 times the frame period 1/f. According to an example, Proc 1 may be the capturing of the two images, Proc 2 may be their merging into one image, Proc 3 and 4 may both be different stages of dewarping task, Proc 5 may be stitching (blending or mere merging of the dewarped images), and Proc 6 and 7 may be two stages of the task of compressing the stitched image. However, this is only an example and there generally may be any number of processing tasks and the corresponding stages. The duration of the tasks may thus also differ.

The tasks are in this way advantageously parallelized for different images in the image processing device (which may comprise one or more processors). This means that a processing task i for frame N is performed simultaneously with task i-1 for frame N+1 and with task i-2 for frame N+2, etc. For instance, in the above example, images of frame N are compressed in the processing stage Proc 6 while the images of frame N+1 are merged in the processing stage Proc 5 and images of frame N+2 dewarped in processing stage Proc 4..

According to a variant, illustrated by dotted lines in Figure 9, the processing unit of the image capturing apparatus may perform further image processing functions to the merged image and only thereafter output the merged image to the PED. For instance, image pipe processing 920 may be performed, including gain control, white balance, any kind of filtering or the like, in order to improve the merged image quality.

Alternatively or in addition, according to a further variant, the processing unit may perform dewarping 930 of the two images composing the merged image and adjust the merged image accordingly. If the dewarping and stitching 930 is performed at the image capturing apparatus, the merged and developed image is output to the PED.

The term "stitching" in this context means that two or more images are merged together to form one image which may then be viewed by a suitable viewer. Typically, stitching is to be performed in such a manner that the stitching boundary is not visible in order to give to the viewer impression that the merged image has been directly captured rather than merged.

According to a variant, the image capturing apparatus may include an encoding unit 940 for compressing the data corresponding to the merged image 910, or if applicable the further processed data in the image pipe 920 and/or the dewarping an stiching unit 930. In this variant, the image capturing apparatus would output the compressed merged image to the PED.

The compression process may be a variable length coding, run length coding, or a hybrid coding according to any standardised or proprietary algorithm. For instance, ITU H.264/AVC (MPEG-4) or ITU H.265/HEVC or H.263 or any other video coding standard may be applied. If still images are captured, any still image standard may be applied. Performing the compression before outputting the merged image to the PED may provide the advantage of a reduced transmission capacity necessary for the transfer. On the other hand, devices such as smart phones, tablets, personal computers or the like can include the software for performing compression, so that the compression may be performed at the PED. In such a case, the image capturing apparatus does not need to provide buffers for performing compression thereby simplifying the device.

The level of sharing the computation power between the image capturing apparatus and the PED may depend on the power available at the PED. For instance, for smart phones with weaker processors, it may be advantageous to perform all processing steps in the units 920-940 in the image capturing apparatus. On the other hand, for a compact and low complexity implementation of the image capturing device it may be advantageous if only the merging in the merging unit 910 is performed at the image capturing device and the merged image is output and further processed by the PED.

As already mentioned, steps in units 920 to 940 in Figure 9 are illustrated by a dashed line meaning that depending on the variant of the image capturing apparatus they are part of the device or not.. For instance, the merging in unit 910 may be performed in the image capturing apparatus and the merged image is output to a PED. In this case, the PED then realizes the subsequent steps, e.g. the further processing and compressing. Furthermore, some or all of the further processing and compression could also be carried outside of the image capturing apparatus and the PED.

Figure 10 illustrates another embodiment of a processing flow performed by the processing unit of the image capturing apparatus. The processing flow of Figure 10 differs from the processing flow of Figure 9 in particular in that before merging 1020, the two images read from the two respective sensors 1 and 2 are image processed separately, i.e. in separate image pipes 1010. This processing flow provides the possibility of parallelizing the image pipe processing 1010. Moreover, since the images captured by different optical arrangements, i.e. different lenses and image sensors, may have been captured under different light conditions, independant adjustments may be necessary to carry out. In this example, after separate processing 1010 of the two images in the respective image pipes, the processed images are merged 1020 like in the embodiment of Figure 9 and can be output to the PED. The PED may then perform dewarping/stitching and/or further image processing and/or realize compression. Alternatively, the dewarping 1030 and/or compression 1040 may be performed in the image capturing apparatus (applied to the merged image) before outputting the processed and/or compressed merged image to the PED. In Figure 10, the dewarping is a part of stitching 1030. This is because dewarping is applied to the captured images to compensate for the warping due to capturing optics (fisheye) in order to enable stitching by simple merging. Thus, for the purpose of dewarping, the merged image may be either transformed entirely in the stitched image or separated again into two images as captured and after dewarping, merged again, in order to stitch the images with possibly invisible stitching boundary.

Figure 11 shows another embodiment of a processing flow which may be performed by the image capturing apparatus. The processing flow of figure 11 differs from the processing flow of figure 10 in that dewarping 1120 is performed before image merging 1130 and performed separately and preferably in parallel for the two respective images to be merged. The dewarping performed on a captured image rather than on the merged image has the advantage of enabling parallel dewarping of the images to be matched. Moreover, the warping effect is a result of distortion caused by the wide-angle lenses of the respective optical arrangements. Thus, the dewarping function used to correct the images can be adapted to the respective images independently.

The two images captured by the respective two sensors and processed in separate image pipes 1110 and by separate dewarping units 1120 are then merged in unit 1130 like described above for the embodiments of Figures 9 and/or 10, corresponding to stitching. The stitched image may then be output to the PED. Alternatively, before outputting the stitched image, the stitched image may be compressed in unit 1140 as described above for the embodiments of Figures 9 and/or 10 and then output to the PED.

As for the timing - each of the above processing tasks performed by 1110, 1120, 1130 should take less than the time between outputting the processed images and advantageously also the time between capturing two images. On the other hand, as discussed above, the processing tasks may be further subdivided into a plurality of stages in which different images are processed in parallel. On the other hand, it is noted that the processing tasks may also be combined and performed in one processing stage, if they can be all performed within the inverse of the output rate.

According to a further embodiment of the invention, the image capturing device as described above with respect to Figures 5a and 5b can also be part of the PED.

Although two cameras are provided in current mobile phones, smart phones and tablets, only a single image pipe and a single encoder are implemented. Therefore, it is not possible to take pictures with both cameras simultaneously to capture two different field of views. In addition, the available computational power (central processing unit, CPU, and general processing unit, GPU) is not sufficient to allow processing of still images captured by both cameras simultaneously, even less for processing of captured video clips. In addition, the currently used image processing techniques are not configured to merge the images captured by the two internal cameras.

In order to integrate the image capturing apparatus within a PED such as smart phone, the hard- and/or software of the PED has to be adapted to the parallel capturing of two images from two optical arrangements, i.e. synchronizing the capturing by providing timing for reading out the sensors and for merging their respective images.

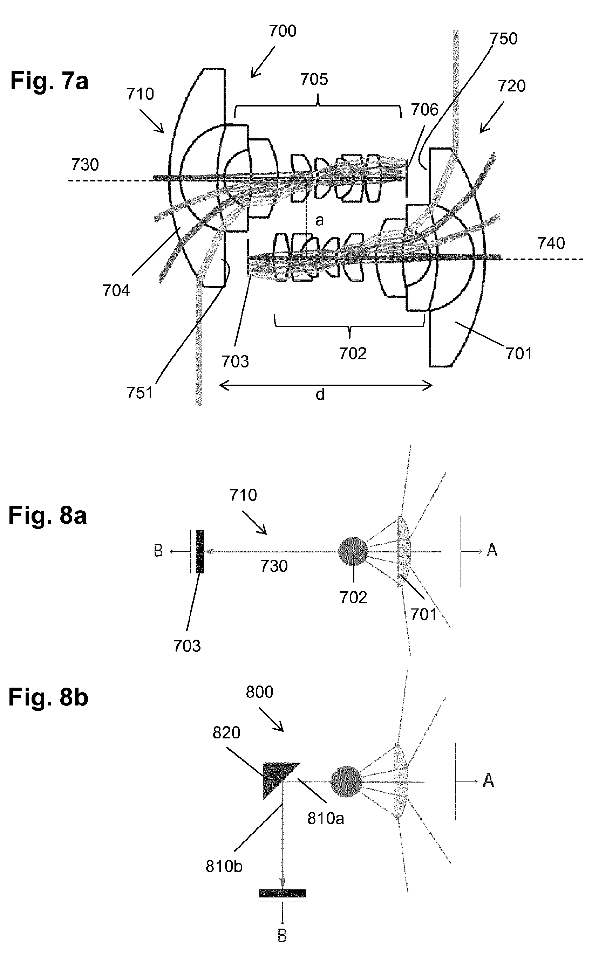

Thus, the PED 1200 shown in Figure 12, according to the embodiment, comprises two optical arrangements 1210, 1220 capable to take images simultaneously and comprises units to realize these tasks and further tasks to be able to provide stitched spherical images or sequences of images (videos, in particular 360° videos). Therese optical arrangements are shown in a detailed view of a portion 1200a of the PED shown from the top. However, it is noted that this detailed view is merely illustrative. Other arrangement of the optical arrangements may be adopted. For instance, in this figure the optical arrangements 1210 and 1220 are arranged one beside the other along the top edge of the PED. However, this arrangement may be different. It may be beneficial to arrange the two optical arrangements beside each other in the direction orthogonal with respect to the top edge of the PED. Any other arrangement is also possible. As mentioned above, the PED may also implement different optical arrangements, for instance those shown in Fig. 8b.

As can be seen in the Figure, the PED 1200 has typical PED components such as a display 1201 which may also serve as a user interface (touch screen), additional user interface 1202 which may be for instance a key/button, a housing 1205, some connection means 1204 for providing data input/output connection and power supply input.

Inside, the PED may include a printed circuit board including further components such as processors, controllers and further units. In particular, the PED may include an input unit 1208 for processing the inputs coming from the user interface and providing corresponding signals to the processing unit and other units. The PED typically further includes a storage 1270 and a communication unit 1280, as well as a processing unit 1230. The PED may further embed a gyroscope 1760. The display 1201 may be controlled by a display controller which may be separate or implemented within the processing unit.

The processing unit 1230 may structurally comprise one or more processors including a general purpose processor and/or a digital signal processor and/or other pieces of programmable or specialized hardware.

The processing unit 1230 of the PED 1200 in this embodiment comprises a merging unit 1240 and a dewarping unit 1250 for performing dewarping of the captured images. These units may be provided within a firmware or an application or may be implemented within the operation system kernel running on a processor or more processors. The processing unit 1230 advantageously embodies an image processing unit 1232 for performing image processing such as white balance or gain control and a compression unit 1233 for compressing the data of the captured images.

The gyroscope 1260 can be used to stabilize the stitched video data. For example, the position of the PED 1200 may change during the capturing of the video for instance due to manipulations by the user or a movement of a support carrying the PED 1200. In order to compensate for camera movement causing fluctuations of the field of view of both optical arrangements 1210, 1220, the processing unit 1230 of the PED 1200 (for instance the image processing unit 1232 or a separate unit) can compensate for fluctuations in the sequence of images based on the input from the gyroscope 1260 specifying the current position of the optical arrangements 1210, 1220 at the time of capturing particular images, so that they appear as if they were taken from the same position, i.e. out with the same respective field of view.

Recorded video data can be stored locally in the storage unit 1270 or streamed over a network or directly via the communication means 1280 to a platform or to a virtual reality (VR) headset.

The exemplary processing flows shown in Figures 9 to 11 may be also applied to the PED with integrated image capturing device exemplified in Figure 12. The "output" in Figures 9 to 11 may also be provided from the PED to another device such as a storage which may also be external or streamed to a network platform such as a social network or any other internet based platform.

The above examples of the image capturing device have mainly been described for two optical arrangements. However, it is noted that the present invention is not meant to be limited to an implementation using only two optical arrangements for covering a substantially spherical view. An external image capturing apparatus (the terms image capturing device and image capturing apparatus are used as synonyms in this document) may be constructed having more than two optical arrangements with the respective lenses and sensors. Then, the merging has to be performed for more than two respective images and the merged image is then transmitted to the PED. The example with using only two optical arrangements is particularly advantageous for implementation into the PED, as illustrated in Figure 12.

Since PEDs usually have a flat shape with two large main sides on one of which the display is provided, it may be beneficial to provide the spherical image capturing apparatus with just two optical arrangements with one arrangement provided on each main side.

However, according to a variant, a PED with integrated image capturing apparatus may also comprise more than two optical arrangements. For instance, a third optical arrangement may be provided on an edge portion between the front and the rear main side of the PED. With such an arrangement, optical arrangements having a field of view smaller than 180° may be used.

### Compact optical arrangement

It is advantageous for some applications if the optical arrangements of the camera take as little space as possible. Moreover, in order to perform stitching of the images taken by different optical arrangements, the distance between the two respective fisheye lenses should be as small as possible in order to avoid parallax. Video data can be stabilized during recording using the Gyroscope embedded inside the device.

Accordingly, the present invention also provides a particularly compact arrangement of the optical arrangements for two cameras as will be described in the following. This arrangement may be used in any of the above described embodiments. However, it is not limited to them and in general, may also be used for any devices which embed two cameras looking in opposite directions.

Figure 7 shows a particularly advantageous arrangement of an optical system for capturing images according to the invention. The optical system 700 comprises a first optical arrangement 710 and a second optical arrangement 720

Each optical arrangement 710 and 720 comprises a head lens 701, 704 in particular a fisheye lens having a field of view of at least 180°, followed by a set of lenses 702, 705 and an image sensor 703, 706 along the respective optical axis 730, 740. The field of view of the optical arrangements 710 and 720 are directed in opposite directions with their optical axes 730 and 740 essentially parallel to each other. In order to allow a compact design with a reduced distance d between the head lenses 701 and 704, the optical arrangements are not arranged on the same optical axis but next to each other with the image sensor 706 of one arrangement 710 next to the head lens 701 allowing light entrance of the other optical arrangement 720 pointing in the opposite direction and vice versa. The optical system has a head to tail like arrangement, allowing a compact design with an acceptable level of parallax. In this embodiment of the optical system 700, the first optical arrangement 710 and the second optical arrangement 720, are arranged such that the sensor 706 of the first optical arrangement 710 is located at the back side 750 of the head lens 701 of the second optical arrangement 720 and the sensor 703 of the second optical arrangement 720 is located at the back side 751 of the head lens 704 of the first optical arrangement 710. Thereby the distance a between the optical axes 730 and 740 can be reduced.

In this embodiment, the optical axes 730 and 740 of the two optical arrangements 710 and 720 are mutually parallel and located in the same plane, here the drawing plane, as shown in Figure 7a.

However, according to a variant illustrated in Figure 7b, showing a top view and a side view of the optical axes 730' and 740', an even more compact optical system can be implemented when the optical axes 730', 740' of the two optical arrangements 710 and 720 are not located in the same plane, i.e. if they are slightly tilted. In other words, the two optical arrangements (optical arrangements) may be located beside each other in parallel, rotated with respect to each other around a common virtual axis 760 essentially perpendicular to both optical axes of the first and second optical arrangement by some small, non-zero angle α. The tilt/rotation angle may be advantageously between 2 and 20 degrees. One of the advantages of the tilt between the optical axes 730' and 740' is that it enables closer mutual positioning, thus a'<a of the lenses to each other so that the parallax is reduced compared to the embodiment in Figure 7a.

It is noted that when using lenses with a field of view larger than 180° it is still possible to to cover the complete spherical field of view, even with a non zero tilt angle α.

However, it is noted that the invention as described above is not limited to the above described head to tail arrangement. In contrast to the optical arrangement as shown in Figure 8a where all components 701, 702 and 704 of the optical arrangement 710 as shown in Figure 7a are sharing a common optical axis 730, Figure 8b shows an optical arrangement 800 with a broken optical axis 810a, 810b.

In Figure 8a the light passes from object A, through the head lens 701 and the set of lenses 702 to the image sensor 703 where the image B is registered.

In Figure 8b, the light path comprises a reflection on a mirror or prism 820 with a reflection angle of 90 degrees. Light paths with a reflection can advantageously be used to further reduce the volume needed to obtain a full sphere capturing device. Light paths with multiple reflections or with reflections under angle different from 90° are further variants to improve the usage of the available space.

The arrangement of Fig. 7a may also comprise such mirror or prism, on one or both of optical axes 730 and 740. In such case, the mirror or prism of the first optical arrangement is advantageously located at the head lens of the second optical arrangement and the mirror or prism of the second optical arrangement is located at the head lens of the first optical arrangement. The above described variants of mutual position of the sensor and head lens apply here for the mutual position between the prism or mirror and head lens (the prism or mirror locates at the back side of the head lens etc). In this case the sensor is positioned adjacent the head lens of the other optical arrangement. This arrangement also enables for a compact construction.

In general, the mirror or prism may be implemented as a single optical element, for instance a double-sided mirror or a prism which reflects on both sides.

It is beneficial for the compact design if the distance between the sensor of the first optical arrangement and the head lens of the second optical arrangement are as close as possible, for instance touching each other or sticked to each other e.g. with an adhesive. However, alternatively there may be a gap between the sensor and the back of the head lens. The back of the head lens is the side of the lens opposite to the side through which the light is entering the head lens towards the image sensor.

The above described head to tail arrangement of the optical system may be advantageously used in the external image capturing apparatus connectable to a PED, e.g. as shown in Figures 2 to 4 or for the PED built-in optical arrangements, e.g. like shown in Figure 5a, since it is very compact.

As mentioned above, the image capturing device embedding the optical system may further comprise a controller for controlling this optical system to capture images with both optical arrangements in parallel (at least partially simultaneously or simultaneously); a processing unit configured to merge the images captured by the two respective optical arrangements into a merged image; and an interface for transmitting the merged image to another device. The controller preferably controls the two optical arrangements to capture respective sequences of images and the capturing of an N-th image by both optical arrangements, N being an integer, is performed in parallel with merging and/or processing of an (N-1)th image. This approach enables real-time merging of the video during the capturing. This is beneficial since the merged images can be immediately provided further to other devices over the interface. Further features of the image capturing device which may embed the optical system have been described above.

It is noted that the above-described embodiments of the optical system with the head to tail arrangement are particularly advantageous for providing an image capturing device capable of covering a spherical field of view. However, the present invention may also be applied to cover for instance a panoramic field of view (of 360°) in one direction and a more narrow field of view in another direction, e.g. with a field of view of 45 to 120°. The present invention can also be applied to any device merging and stitching images independently of the size of the field of view.

It is further recognized that the various embodiments may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments may also be performed or embodied by a combination of these devices.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It would be appreciated by a person skilled in the art that numerous variations and/or modifications may be made to the present disclosure as shown in the specific embodiments. The present embodiments are, therefore, to be considered in all respects to be illustrative and not restrictive.

In summary, the present invention relates to an optical system for capturing images for an image stitching device, comprising two optical arrangements, namely a first optical arrangement and a second optical arrangement, wherein each optical arrangement comprises a plurality of lenses including a head lens and an image sensor located on the same optical axis,the first optical arrangement and the second optical arrangement are located beside each other and the image sensor of the first optical arrangement is located at the head lens of the second optical arrangement and the image sensor of the second optical arrangement is located at the head lens of the first optical arrangement.

## Claims

1. An optical system for capturing images for an image stitching device, comprising two optical arrangements, namely a first optical arrangement and a second optical arrangement, wherein
each one of the first optical arrangement and the second optical arrangement comprises a head lens and an image sensor, in particular located on the same optical axis,
the first optical arrangement and the second optical arrangement are located beside each other and the image sensor of the first optical arrangement is located at or adjacent to the head lens of the second optical arrangement and the image sensor of the second optical arrangement is located at or adjacent to the head lens of the first optical arrangement.

2. The optical system according to claim 1, the image sensor of the first optical arrangement is located at the back side of the head lens of the second optical arrangement and the image sensor of the second optical arrangement is located at the back side of the head lens of the first optical arrangement.

3. The optical system according to claim 1 or 2, wherein the back area of the head lens of the first optical arrangement and the back of the image sensor area of the second optical arrangement overlap when viewed in the direction of the optical axis of the first optical arrangement.

4. The optical system according to any of claims 1 to 3, wherein each optical arrangement has a field of view of at least 180°.

5. The optical system according to claim 1 to 4, wherein the optical axis of the first optical arrangement is rotated by a predefined rotation angle with respect to the optical axis of the second optical arrangement around a virtual axis common to both the optical axis of the first optical arrangement and the optical axis of the second optical arrangement.

6. The optical system according to any of claims 1 to 4, wherein the optical axis of the first optical arrangement and the optical axis of the second optical arrangement are mutually parallel and located in the same plane.

7. An image capturing device comprising:
the optical system according to any of claims 1 to 7;
a controller for controlling the optical system to capture images with both optical arrangements in parallel;
a processing unit configured to merge the images captured by the two respective optical arrangements into a merged image; and
an interface for transmitting the merged image to another device.

8. The image capturing device according to claim 7, wherein the processing unit is further configured to process the images captured by the two respective image sensors by at least one of white balancing, gain control, exposure control, or dewarping.

9. The image capturing device according to claim 7 or 8, wherein the processing unit is further configured to process the merged image by the two respective image sensors by at least one of white balancing, gain control, exposure control, or dewarping.

10. The image capturing device according to any of claims 7 to 9, further comprising an encoding unit for compressing the merged image.

11. The image capturing device according to any of claims 7 to 10, wherein the controller controls the two optical arrangements to capture respective sequences of images and the capturing of an N-th image by both optical arrangements, N being an integer, is performed in parallel with merging and/or processing of an (N-m)th image, m being an integer equal to or larger than 1.

12. The image capturing device according to any of claims 7 to 11, which is an external device connectable to a personal electronic device, namely one of a mobile phone, a smart phone, a tablet, a laptop or a smart watch; further comprising an output unit configured to transmit merged images using the interface to the personal electronic device.

13. The image capturing device according to claim 12, wherein the interface is one of a wireless interface, a cable or a connector and the capturing of images is performed in parallel with transmission of the images.

14. The image capturing device according to any of claims 7 to 11 being a personal electronic device, in particular one of a mobile phone, a smart phone, a tablet, a laptop or a smart watch.

15. The image capturing device according to any of claims 7 to 14, wherein
the personal electronic device has a front side with a display device and a back side;
the optical system is integrated in the personal electronic device, wherein the head lens of the first optical arrangement is accommodated on the front side and the second optical arrangement is accommodated on the back side.
